# EUROPEAN PATENT APPLICATION

(11) **EP 4 101 617 A1**
(43) Date of publication of application: **14.12.2022**
(21) Application number: 22174857.7
(22) Date of filing: 23.05.2022
(51) Int. Cl.: B29C 33/00, B29C 43/18, B29C 43/38, B21D 22/20, B21D 37/08, B29C 70/68, B29C 70/78, B29C 70/88, B21D 47/04, B29C 43/40, B21D 22/02, B21D 22/10, B21D 22/21, B21D 22/22, B29K 105/06, B29K 105/12, B29K 105/20, B29K 705/00

(54) **MOLD, APPARATUS, AND METHOD FOR PRODUCING METAL-RESIN COMPOSITE**

(30) Priority: 10.06.2021 JP 2021097334
(71) Applicant: Kabushiki Kaisha Kobe Seiko Sho (Kobe Steel, Ltd.), Kobe-shi, Hyogo 651-8585 (JP)
(72) Inventor: WATANABE, Kenichi, Kobe-shi, 651-2271 (JP); IHARA, Ryohei, Kobe-shi, 651-2271 (JP); YAMAGUCHI, Zenzo, Kobe-shi, 651-2271 (JP)
(74) Representative: Müller-Boré & Partner Patentanwälte PartG mbB

(57) **Abstract**

A mold (100) is for press molding a metal plate (10) and a resin material (20) to produce a metal-resin composite (1). The mold (100) includes an upper mold (110) and a lower mold (120) that sandwich the metal plate (10) and the resin material (20). A cavity (C) for arranging the resin material (20) is provided by the upper mold (110) and the lower mold (120). The upper mold (110) has a recess into which the resin material (20) leaking from the cavity (C) is caused to flow.

## Description

### BACKGROUND OF THE INVENTION

### TECHNICAL FIELD

The present invention relates to a mold, an apparatus, and a method for producing a metal-resin composite.

### BACKGROUND ART

An apparatus for producing a metal-resin composite by press molding a metal member and a thermosetting resin material is known (for example, Patent Document 1).

### PRIOR ART DOCUMENTPATENT DOCUMENT

Patent Document1: JP 2020-104411 A

### SUMMARY OF THE INVENTION

### PROBLEMS TO BE SOLVED BY THE INVENTION

In the case of molding the metal-resin composite, it is difficult to close a gap between an upper mold and a lower mold as compared with a case of press molding only resin. As a result, a resin material may leak to an unintended location through the gap between the upper mold and the lower mold of the mold. Such leakage of the resin material leads to problems such as, for example, spot welding failure in a subsequent assembly process, metal mold fixing due to inflow of the resin material into another gap of the mold, and non-filling due to insufficient filling pressure of the resin material.

An object of the present invention is to suppress leakage of a resin material to an unintended location in a mold, an apparatus, and a method for producing a metal-resin composite.

### MEANS FOR SOLVING THE PROBLEMS

According to a first aspect of the present invention, there is provided a mold for producing a metal-resin composite by press-molding a metal member and a resin material. The mold includes an upper mold and a lower mold that sandwich the metal member and the resin material. A cavity for arranging the resin material is provided by the upper mold and the lower mold, and the upper mold has a recess into which the resin material leaking from the cavity is caused to flow.

According to this configuration, even in a case where the resin material leaks from the cavity for arranging the resin material, the resin material can be collected in the recess, so that leakage of the resin material to an unintended location can be suppressed. That is, in the above configuration, the leakage of the resin material from the cavity is not completely prevented, but the resin material is allowed to flow to a previously intended location (recess). The resin material collected in the recess appears as a burr after molding. However, the appearance of the metal-resin composite as a product can be maintained by deburring.

The upper mold may be a punch on which the recess is formed. Further, the upper mold may include a holder on which the recess is formed and which presses the metal member, and a punch for molding.

According to these configurations, since the recess is formed on the punch or the holder, the recess can be easily formed without requirement of additional components.

The recess may have a shape longer in the vertical direction than in the horizontal direction.

According to this configuration, that the recess becomes long in the horizontal direction can be suppressed. if the recess becomes long in the horizontal direction, the resin material collected in the recess appears as a burr that is long in the horizontal direction after molding. Such a burr or a deburring mark obtained by removing the burr may be an obstacle in a case where the metal-resin composite is joined to another component. Further, in a case where the metal member has the flange portion, the flange portion of the metal member cannot be held. For this reason, the dimensional accuracy after molding may be deteriorated.

The recess may have a seat portion capable of supporting the resin material from below.

According to this configuration, as the resin material is supported from below by the seat portion, it is possible to suppress unintentional adhesion of the resin material to an upper surface of the metal-resin composite. Therefore, the appearance and surface quality of the metal-resin composite can be maintained.

The metal-resin composite may have, in a cross section perpendicular to a longitudinal direction, a bottom wall portion extending in the horizontal direction, a side wall portion rising from both ends of the bottom wall portion, and a flange portion extending outward in the horizontal direction from the side wall portion, the upper mold may have, in the cross section, a first molding upper surface for molding the bottom wall portion, a second molding upper surface for molding the side wall portion, and a third molding upper surface for molding the flange portion, the lower mold may have, in the cross section, a first molding lower surface for molding the bottom wall portion, a second molding lower surface for molding the side wall portion, and a third molding lower surface for molding the flange portion, and a step may be provided on the second molding upper surface.

According to this configuration, in order for the resin material to leak out of the cavity, the resin material needs to flow beyond the step of the upper mold. For this reason, the leakage of the resin material can be suppressed. Therefore, the filling pressure in the cavity of the resin material can be increased, and the quality can be improved.

A length of the second molding upper surface above the step may be 5 mm or more.

According to this configuration, leakage of the resin material to the flange portion can be suppressed to a certain extent. The flange portion of the metal-resin composite is often used for joining to other components, and is a portion requiring surface protection.

In a state where the upper mold and the lower mold are closed, a distance between the second molding upper surface and the second molding lower surface may be set to be at least partially equal to a thickness of the metal member.

According to this configuration, since flow of the resin material between the second molding upper surface and the second molding lower surface can be suppressed, leakage of the resin material from the cavity can be suppressed, and filling pressure of the resin material can be increased. Here, "equal" is design setting, and does not mean that leakage of the resin material from the cavity is completely prevented.

According to a second aspect of the present invention, there is provided an apparatus for producing a metal-resin composite by press molding a metal member and a resin material. The apparatus includes an upper mold and a lower mold that sandwich the metal member and the resin material, and a drive unit that moves at least one of the upper mold and the lower mold in a vertical direction. A cavity for arranging the resin material is provided by the upper mold and the lower mold, and the upper mold has a recess into which the resin material leaking from the cavity is caused to flow.

According to this configuration, even in a case where the resin material leaks from the cavity for arranging the resin material, the resin material can be collected in the recess, so that leakage of the resin material to an unintended location can be suppressed.

According to a third aspect of the present invention, there is provided a method for producing a metal-resin composite by press molding a metal member and a resin material. The method includes sandwiching the metal member and the resin material between an upper mold and a lower mold on which a cavity for arranging the resin material is provided, and causing the resin material leaking from the cavity to flow toward a recess provided on the upper mold in order to collect the resin material in the recess.

According to this configuration, even in a case where the resin material leaks from the cavity for arranging the resin material, the resin material can be collected in the recess, so that leakage of the resin material to an unintended location can be suppressed.

### EFFECT OF INVENTION

According to the present invention, in a mold, an apparatus, and a method for producing a metal-resin composite, leakage of a resin material to an unintended location can be suppressed.

### BRIEF DESCRIPTION OF THE DRAWINGS

Fig. 1 is a cross-sectional view of a metal-resin composite;
Fig. 2 is a cross-sectional view illustrating a first process of a method for producing a metal-resin composite in a first embodiment;
Fig. 3 is a cross-sectional view illustrating a second process of the method for producing the metal-resin composite in the first embodiment;
Fig. 4 is a cross-sectional view illustrating a third process of the method for producing the metal-resin composite in the first embodiment;
Fig. 5 is a cross-sectional view illustrating a fourth process of the method for producing the metal-resin composite in the first embodiment;
Fig. 6 is a cross-sectional view illustrating a fifth process of the method for producing the metal-resin composite in the first embodiment;
Fig. 7 is a cross-sectional view illustrating a sixth process of the method for producing the metal-resin composite in the first embodiment;
Fig. 8 is a cross-sectional view illustrating a third process of a method for producing a metal-resin composite in a first variation of the first embodiment;
Fig. 9 is a cross-sectional view illustrating a fourth process of the method for producing the metal-resin composite in the first variation of the first embodiment;
Fig. 10 is a cross-sectional view illustrating a third process of a method for producing a metal-resin composite in a second variation of the first embodiment;
Fig. 11 is a cross-sectional view illustrating a first process of a method for producing a metal-resin composite in a second embodiment;
Fig. 12 is a cross-sectional view illustrating a second process of the method for producing the metal-resin composite in the second embodiment;
Fig. 13 is a cross-sectional view illustrating a third process of the method for producing the metal-resin composite in the second embodiment;
Fig. 14 is a cross-sectional view illustrating a fourth process of the method for producing the metal-resin composite in the second embodiment;
Fig. 15 is a cross-sectional view illustrating a fifth process of the method for producing the metal-resin composite in the second embodiment;
Fig. 16 is a cross-sectional view illustrating a sixth process of the method for producing the metal-resin composite in the second embodiment;
Fig. 17 is a cross-sectional view illustrating a seventh process of the method for producing the metal-resin composite in the second embodiment;
Fig. 18 is a cross-sectional view illustrating an eighth process of the method for producing the metal-resin composite in the second embodiment;
Fig. 19 is a cross-sectional view of a metal-resin composite in a variation; and
Fig. 20 is a cross-sectional view of a mold in the variation.

### DETAILED DESCRIPTION OF THE PREFERRED EMBODIMENT

Hereinafter, a mold, an apparatus, and a method for producing a metal-resin composite will be described as an embodiment of the present invention with reference to the accompanying drawings.

### (First embodiment)

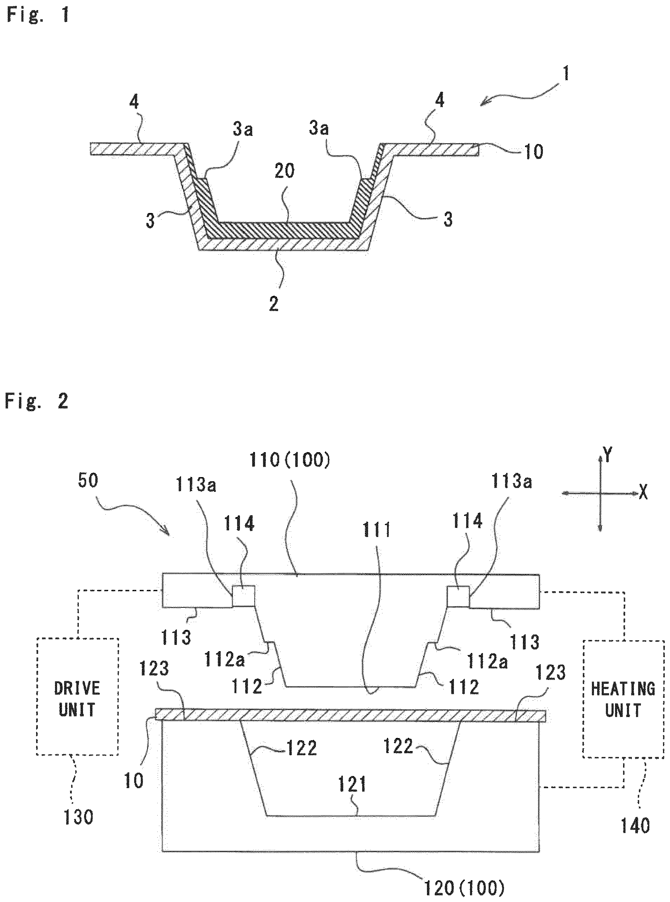

Referring to Fig. 1, a metal-resin composite 1 produced in the present embodiment includes a metal plate (metal member) 10 and a resin material 20. The metal-resin composite 1 has a hat shape in a cross section perpendicular to a longitudinal direction. Specifically, the metal-resin composite 1 is formed by fixing the resin material 20 to an inner surface (recessed surface) of the metal plate 10 having a hat shape. However, the shape of the metal-resin composite 1 is not limited to a hat shape, and may be any shape.

The metal-resin composite 1 includes a bottom wall portion 2 extending in the horizontal direction, a side wall portion 3 rising from both ends of the bottom wall portion 2, and a flange portion 4 extending outward in the horizontal direction from the side wall portion 3. The bottom wall portion 2 includes the metal plate 10 and the resin material 20, the side wall portion 3 includes the metal plate 10 and the resin material 20, and the flange portion 4 includes only the metal plate 10. The side wall portion 3 is provided with a step portion 3a in which the thickness of the resin material 20 decreases from the bottom wall portion 2 toward the flange portion 4.

A mold 100, an apparatus 50, and a method for producing the metal-resin composite 1 according to the present embodiment will be described with reference to Figs. 2 to 7. In the drawings, the horizontal direction is indicated as an X direction, and the vertical direction is indicated as a Y direction. Further, the metal-resin composite 1 (the metal plate 10 and the resin material 20) is hatched to indicate a cross section. However, hatching is omitted for other members for clarity of illustration.

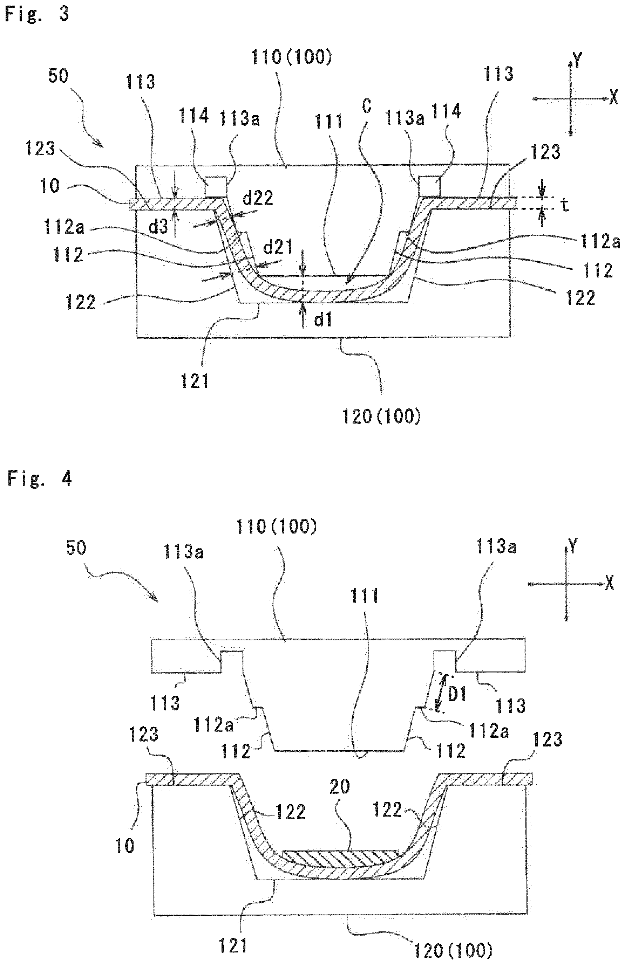

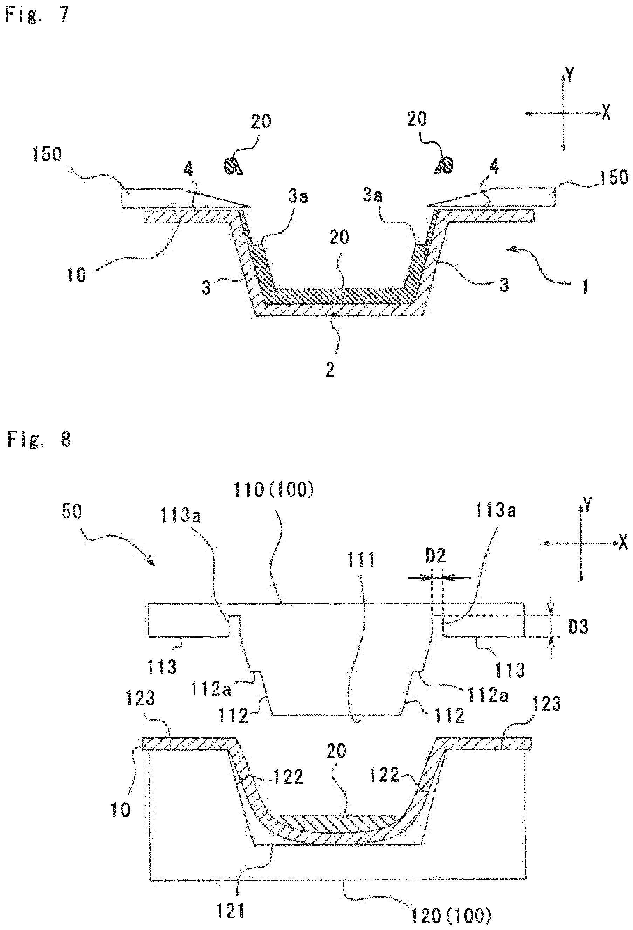

In the present embodiment, press molding is performed twice while first to sixth processes illustrated in Figs. 2 to 7 are executed sequentially. First pressing is executed in the first to third processes illustrated in Figs. 2 to 4, and second pressing is executed in the third to fifth processes illustrated in Figs. 4 to 6. Further, deburring is performed in a sixth process illustrated in Fig. 7. Note that, in the present embodiment, the first and second pressing are performed with a same mold 100. However, the first and second pressing may be performed with different molds.

The apparatus 50 for producing the metal-resin composite 1 in the present embodiment includes the mold 100, a drive unit 130 that drives the mold 100, and a heating unit 140 that heats the mold. Note that, as the drive unit 130 and the heating unit 140, publicly-known units capable of executing press molding can be used, and details are not illustrated and a conceptual diagram is illustrated only in Fig. 2, and illustration is omitted in Fig. 3 and subsequent figures.

The mold 100 is for press molding the metal plate 10 and the resin material 20 to produce the metal-resin composite 1. The mold 100 includes an upper mold 110 and a lower mold 120 that sandwich the metal plate 10 and the resin material 20. In the present embodiment, the upper mold 110 is configured as a punch, and the lower mold 120 is configured as a die. The upper mold 110 is movable in the vertical direction by the drive unit 130, that is, is configured to be capable of approaching and separating from the lower mold 120. However, a driving mode of the mold 100 by the drive unit 130 is not particularly limited, and the drive unit 130 can move at least one of the upper mold 110 and the lower mold 120 in the vertical direction.

The upper mold 110 has a first molding upper surface 111 for molding the bottom wall portion 2 (see Fig. 1), a second molding upper surface 112 for molding the side wall portion 3 (see Fig. 1), and a third molding upper surface 113 for molding the flange portion 4 (see Fig. 1). In the present embodiment, the first molding upper surface 111 and the third molding upper surface 113 are configured as horizontal surfaces, and the second molding upper surface 112 is configured to connect the first molding upper surface 111 and the third molding upper surface 113 and to be inclined from the vertical direction.

In the present embodiment, a step 112a is provided on the second molding upper surface 112. The step 112a is provided so as to rise one step from the first molding upper surface 111 toward the third molding upper surface 113.

In the present embodiment, a recess 113a for collecting the resin material 20 is formed on the upper mold (punch) 110. The recess 113a is formed to open downward on the third molding upper surface 113. The recess 113a has a rectangular shape in the illustrated cross section.

In first to second processes illustrated in Figs. 2 to 3, a spacer 114 is arranged so as to fill the recess 113a. The spacer 114 has a shape complementary to the recess 113a, and is configured to be detachable from the recess 113a. Further, in third to sixth processes illustrated in Figs. 4 to 7, the spacer 114 is removed from the recess 113a.

The lower mold 120 has a first molding lower surface 121 for molding the bottom wall portion 2 (see Fig. 1), a second molding lower surface 122 for molding the side wall portion 3 (see Fig. 1), and a third molding lower surface 123 for molding the flange portion 4 (see Fig. 1). In the present embodiment, the first molding lower surface 121 and the third molding lower surface 123 are configured as horizontal surfaces, and the second molding lower surface 122 is configured to connect the first molding lower surface 121 and the third molding lower surface 123 and to be inclined from the vertical direction. The first molding lower surface 121 is arranged to face the first molding upper surface 111, the second molding lower surface 122 is arranged to face the second molding upper surface 112, and the third molding lower surface 123 is arranged to face the third molding upper surface 113.

Preferably, the second molding upper surface 112 and the second molding lower surface 122 are inclined by 3 to 10 degrees from the vertical direction. This makes it possible to reduce a gap between the upper mold 110 and the lower mold 120 while allowing the resin material 20 to leak out of a cavity C. Therefore, the filling pressure of the resin material 20 in the cavity C can be increased, and adhesion of the resin material 20 to the flange portion 4 can be suppressed.

In the first process illustrated in Fig. 2, the upper mold 110 and the lower mold 120 are heated by the heating unit 140 to be prepared so that warm pressing can be performed. Further, the metal plate 10 having a flat plate shape before molding is placed on the lower mold 120.

In the second process illustrated in Fig. 3, the upper mold 110 is lowered, and the metal plate 10 is sandwiched between the upper mold 110 and the lower mold 120 and press molded into a substantially hat shape. In a state where the upper mold 110 and the lower mold 120 are closed, a distance d1 between the first molding upper surface 111 and the first molding lower surface 121 is larger than a thickness t of the metal plate 10 (d1 > t), and a distance d3 between the third molding upper surface 113 and the third molding lower surface 123 is substantially equal to the thickness t of the metal plate 10 (d3 = t). A distance d21 between the second molding upper surface 112 and the second molding lower surface 122 below the step 112a is larger than the thickness t of the metal plate 10 (d21 > t), and a distance d22 between the second molding upper surface 112 and the second molding lower surface 122 above the step 112a is substantially equal to or slightly larger than the thickness t of the metal plate 10 (d22 = t or d22 > t). In particular, by setting the distance d22 equal to the thickness t of the metal plate 10, filling pressure of the resin material 20 in a subsequent process can be increased. Note that, in this process, the resin material 20 (see Figs. 4 to 7) is not provided yet, and only metal plate 10 is sandwiched between the upper mold 110 and the lower mold 120. A cavity C to be filled with the resin material 20 is provided between the first and second molding upper surfaces 111 and 112 and the first and second molding lower surfaces 121 and 122 (specifically, the metal plate 10).

In the third process illustrated in Fig. 4, the upper mold 110 is raised. At this time, the metal plate 10 is molded into a shape close to a final shape (a hat shape in the present embodiment). The spacer 114 (see Fig. 3) is removed from the recess 113a as the upper mold 110 is raised. Then, the resin material 20 having a sheet-like shape (also referred to as prepreg) cut into a necessary size is placed on the metal plate 10. In the present embodiment, the resin material 20 is cured at a high temperature and a high pressure by a molding method called sheet molding compound (SMC) method (see the fourth process described later). In the present embodiment, as the resin material 20, a fiber reinforced plastic (FRP) in which a glass fiber or a carbon fiber is impregnated into resin is used. Further, in the present embodiment, the resin material 20 has a thermosetting property. In this process, the resin material 20 is not yet heated, that is, not cured. Note that the resin material 20 does not need to have a sheet-like shape, and can have any shape.

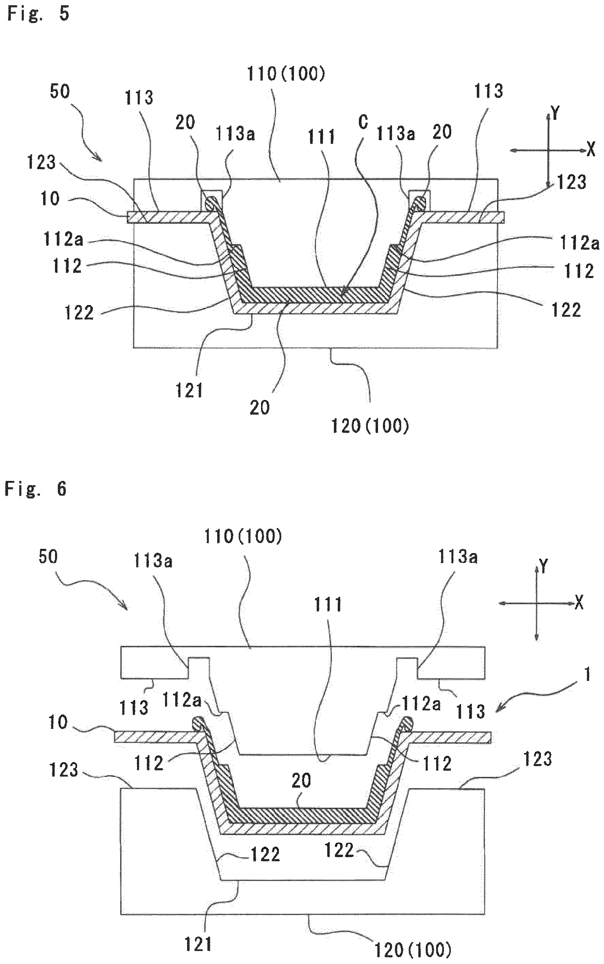

In a fourth process illustrated in Fig. 5, the upper mold 110 is lowered, and the metal plate 10 and the resin material 20 are sandwiched between the upper mold 110 and the lower mold 120 to be press molded into a hat shape. At this time, the cavity C is filled with the resin material 20. That is, the resin material 20 cut to a necessary size is put into the mold 100 and cured under high temperature and high pressure by the SMC method. In the present embodiment, the cavity C refers to a space below the step 112a formed by being sandwiched between the upper mold 110 and the lower mold 120 (specifically, the metal plate 10). A part of the resin material 20 leaks from the cavity C, flows upward along the second molding upper surface 112, and is collected in the recess 113a. In the recess 113a, the resin material 20 is cured as a lump.

In the fifth process illustrated in Fig. 6, the upper mold 110 is raised. The metal plate 10 is molded into a final shape (a hat shape in the present embodiment), and the resin material 20 is fixed to an upper surface (a hatshaped recessed surface) of the metal plate 10 so that the metal-resin composite 1 is formed. However, the resin material 20 collected in the recess 113a and cured as a lump still remains as a burr.

In a sixth process illustrated in Fig. 7, the burr is removed by a deburring tool 150 such as a cutter. In this way, the metal-resin composite 1 having a hat shape is produced as a product.

According to the present embodiment, even in a case where the resin material 20 leaks out of the cavity C, since the resin material 20 can be collected in the recess 113a, it is possible to suppress the resin material 20 from leaking out to an unintended place such as the flange portion 4. That is, in the present embodiment, the leakage of the resin material 20 from the cavity C is not completely prevented, but the resin material 20 is allowed to flow to a previously intended location (recess 113a). Here, the resin material 20 collected in the recess 113a appears as a burr after molding. However, the appearance of the metal-resin composite 1 as a product can be maintained by deburring.

Further, since the recess 113a is formed on the upper mold (punch) 110, the recess 113a can be easily formed without requirement of additional components.

Further, since the resin material 20 needs to flow beyond the step 112a of the upper mold 110 in order to leak out of the cavity C, it is possible to suppress the leakage of the resin material 20. Therefore, the filling pressure of the resin material 20 in the cavity C can be increased, and the quality can be improved.

Further, referring to Fig. 4, a length D1 of the second molding upper surface 112 above the step 112a may be 5 mm or more (D1 ≥ 5 mm). In this manner, a certain length or longer can be secured for a distance from the cavity C to the flange portion 4, and leakage of the resin material 20 to the flange portion 4 can be suppressed to a certain extent. The flange portion 4 of the metal-resin composite 1 is often used for joining to other components, and is a portion requiring surface protection.

Further, referring to Fig. 8 illustrating a variation of Fig. 4, the recess 113a may have a shape longer in the vertical direction than in the horizontal direction (D2 < D3). In this manner, it is possible to suppress the recess 113a from becoming long in the horizontal direction. If the recess 113a becomes long in the horizontal direction, the resin material 20 collected in the recess 113a appears as a burr that is long in the horizontal direction after molding. Such a burr or a deburring mark obtained by removing the burr may be an obstacle in a case where the metal-resin composite 1 is joined to another component.

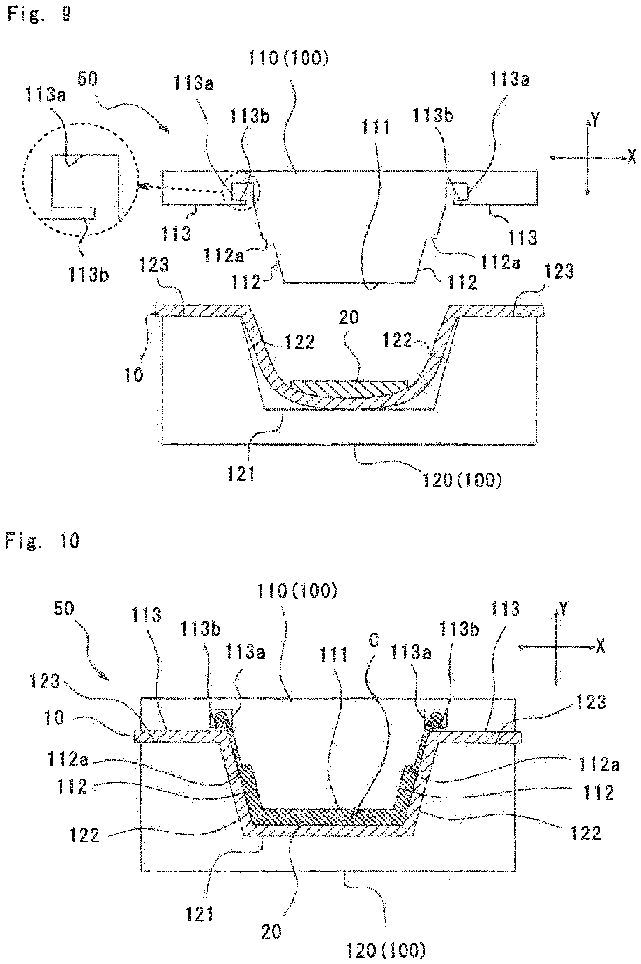

Further, referring to Figs. 9 and 10 illustrating the variations of Figs. 4 and 5, the recess 113a may have a seat portion 113b capable of supporting the resin material 20 from below. In a broken line circle in Fig. 9, the recess 113a and the seat portion 113b are enlarged. In the illustrated example, the seat portion 113b is formed so as to partially close the recess 113a. As a result, the recess 113a has a narrow opening and has an internally expanded shape. Therefore, the resin material 20 flowing into the recess 113a can be supported from below by the seat portion 113b, and unintentional adhesion of the resin material 20 to the upper surface of the metal-resin composite 1 can be suppressed. Therefore, the appearance and surface quality of the metal-resin composite 1 can be maintained.

### (Second embodiment)

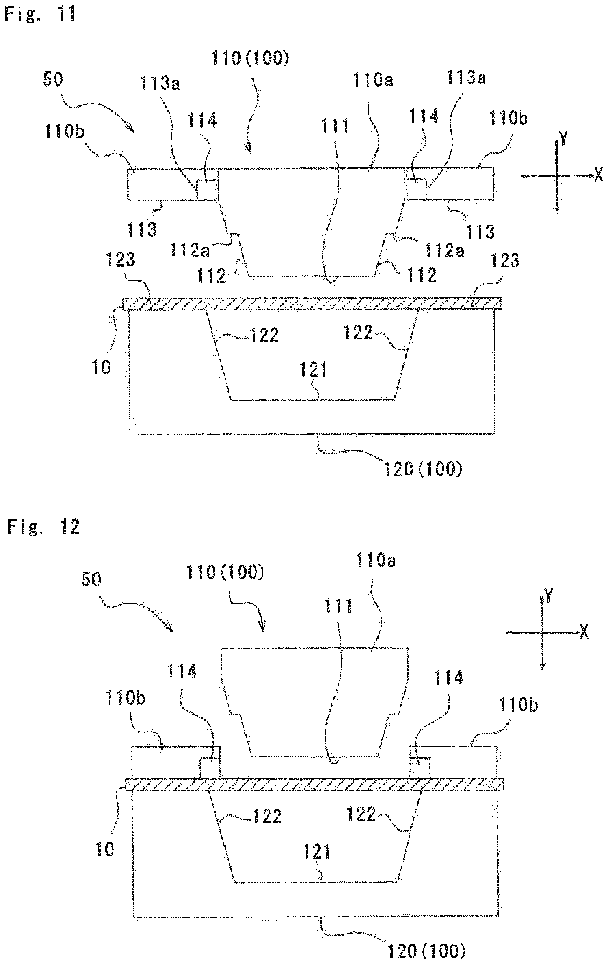

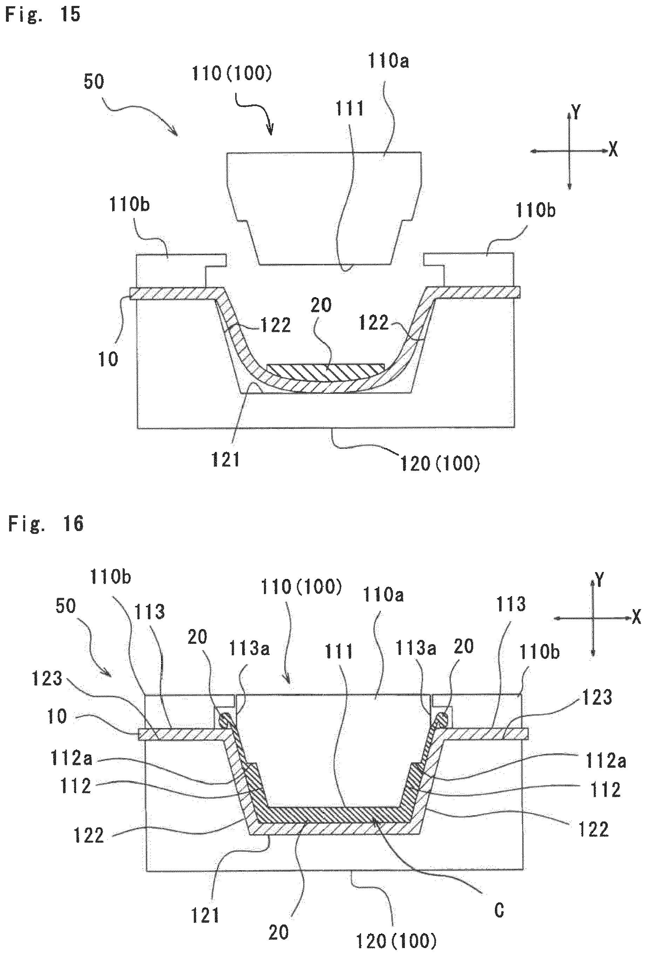

The mold 100, the apparatus 50, and the method for producing the metal-resin composite 1 according to a second embodiment will be described with reference to Figs. 11 to 18.

In the present embodiment illustrated in Figs. 11 to 18, the upper mold 110 has a separated punch 110a and a holder 110b. The present embodiment is substantially the same as the first embodiment except for this. Therefore, the description of a portion illustrated in the first embodiment may be omitted.

In the present embodiment, the upper mold 110 includes the holder 110b for pressing the metal plate 10 and the punch 110a for molding. The holder 110b and the punch 110a are independently movable in the vertical direction by the drive unit 130 (see Fig. 2). In the present embodiment, the recess 113a is formed in the holder 110b. Specifically, the recess 113a is formed on the inner side of the holder 110b in the horizontal direction and at a position adjacent to the punch 110a. A side surface of the recess 113a includes a horizontal outside surface of the punch 110a and a horizontal inside surface of the holder 110b. A bottom surface (upper surface in the figure) of the recess 113a is constituted by the holder 110b.

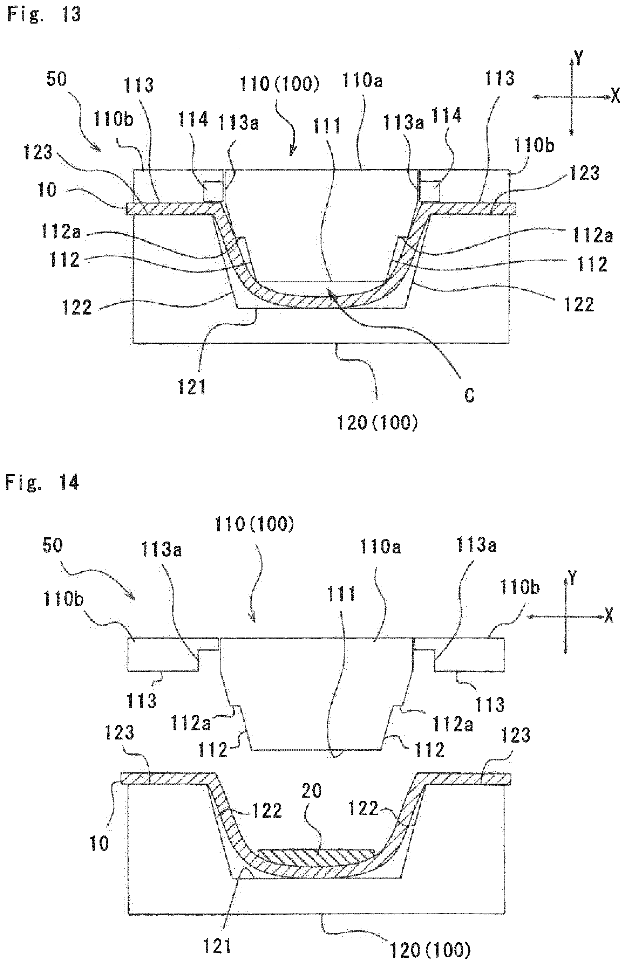

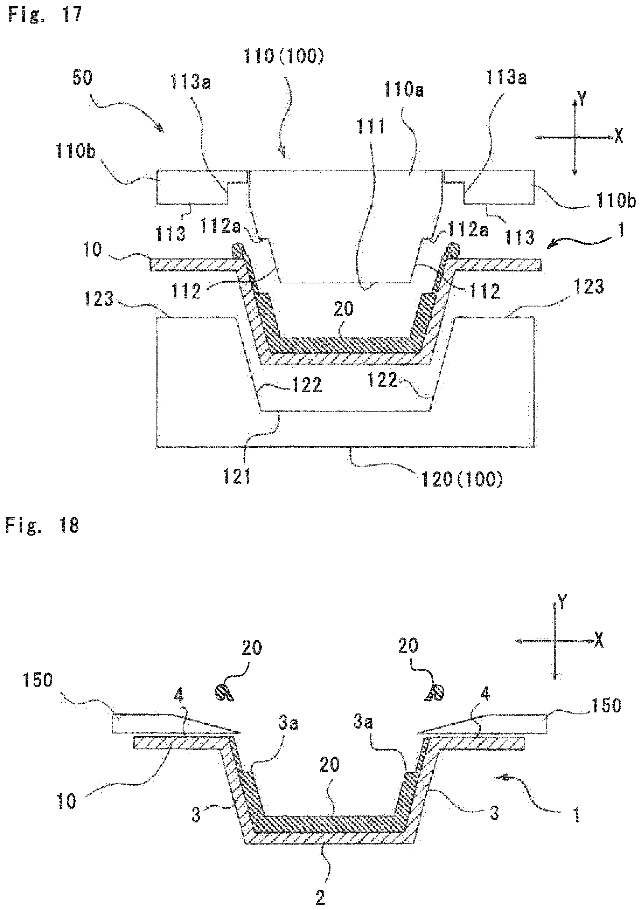

In the present embodiment, press molding is performed twice while the first to eighth processes illustrated in Figs. 11 to 18 are executed sequentially. First pressing is executed in the first to fourth processes illustrated in Figs. 11 to 14, and second pressing is executed in the fourth to seventh processes illustrated in Figs. 14 to 17. Further, deburring is executed in the eighth process illustrated in Fig. 18.

In the first press of the first to fourth processes illustrated in Figs. 11 to 14, unlike the first embodiment, the holder 110b descends prior to the punch 110a to press the metal plate 10. Next, the punch 110a descends to press mold the metal plate 10. The first to fourth processes of the present embodiment are substantially the same as the first to third processes of the first embodiment except that the punch 110a and the holder 110b are independently driven as described above.

Also in the second pressing in the fourth to seventh processes illustrated in Figs. 14 to 17, unlike the first embodiment, the holder 110b descends prior to the punch 110a to press the metal plate 10. Next, the punch 110a descends to press mold the metal plate 10. The fourth to seventh processes of the present embodiment are substantially the same as the third to fifth processes of the first embodiment except that the punch 110a and the holder 110b are independently driven as described above.

The deburring of the eighth process illustrated in Fig. 18 is the same as the sixth process of the first embodiment.

According to the present embodiment, since the recess 113a is formed on the holder 110b, the recess 113a can be easily formed without requirement of additional components.

Although specific embodiments of the present invention and variations of the embodiments are described above, the present invention is not limited to the above embodiments, and various modifications can be made within the scope of the present invention. For example, an embodiment of the present invention may be obtained by appropriately combining the content of individual embodiments and variations.

Further, as the resin material 20, a thermoplastic resin impregnated with a glass fiber or a carbon fiber may be used. In this case, the resin material 20 is put into the mold 100 in a state of being heated and softened. Then, the resin material 20 is cooled and cured on the metal plate 10 in the mold 100 so that the metal-resin composite 1 is produced.

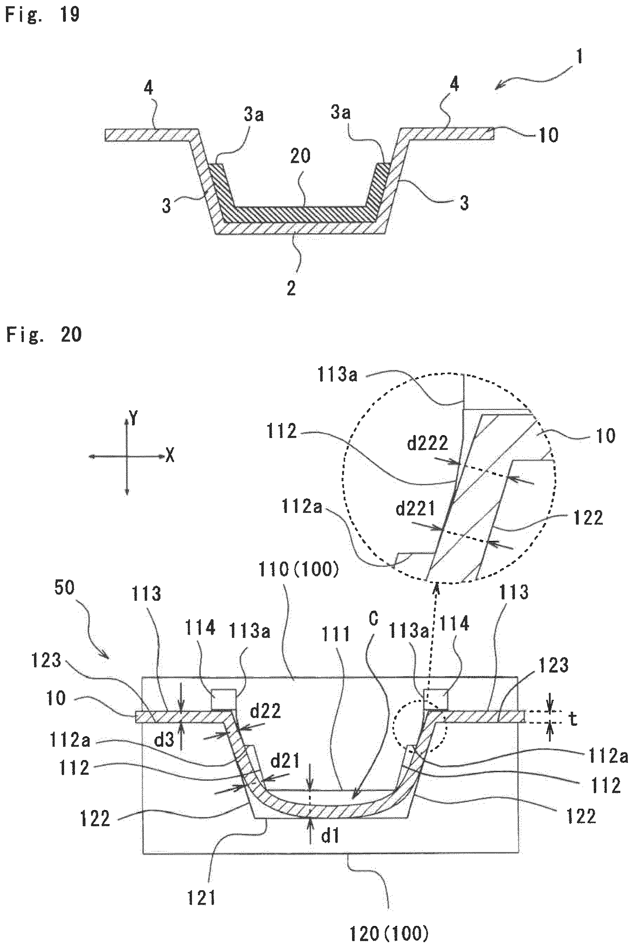

Further, referring to Fig. 19, in the metal-resin composite 1, the resin material 20 may terminate at the side wall portion 3 (see an end surface 3a). The metal-resin composite 1 can be manufactured by removing (deburring) the resin material 20 above the end surface 3a from the state illustrated in Fig. 1.

Further, referring to Fig. 20, a gap d22 between the second molding upper surface 112 and the second molding lower surface 122 may expand upward (d222 > d221). In the illustrated example, an inclination angle of the second molding lower surface 122 is constant. However, an inclination angle of the second molding upper surface 112 is changed along the vertical direction as it goes upward.

In the metal-resin composite 1, an adhesive layer may be provided between the metal plate 10 and the resin material 20. In this case, by providing the adhesive layer, the metal member 10 and the resin material 20 can be firmly integrally molded.

### DESCRIPTION OF SYMBOLS

- 1: Metal-plastic composite
- 2: Bottom wall portion
- 3: Side wall portion
- 3a: Step portion
- 4: Flange portion
- 10: Metal plate (Metal member)
- 20: Resin material
- 50: Apparatus
- 100: Mold
- 110: Upper mold
- 110a: Punch
- 110b: Holder
- 111: First molding upper surface
- 112: Second molding upper surface
- 112a: Step
- 112b: Holding groove
- 113: Third molding upper surface
- 113a: Recess
- 113b: Seat portion
- 114: Spacer
- 120: Lower mold
- 121: First molding lower surface
- 122: Second molding lower surface
- 123: Third molding lower surface
- 130: Drive unit
- 140: Heating unit
- C: Cavity

## Claims

1. A mold (100) for producing a metal-resin composite (1) by press-molding a metal member (10) and a resin material (20), the mold (100) comprising:
an upper mold (110) and a lower mold (120) that sandwich the metal member (10) and the resin material (20),
wherein a cavity (C) for arranging the resin material (20) is provided by the upper mold (110) and the lower mold (120),
**characterized in that**
the upper mold (110) has a recess (113a) into which the resin material (20) leaking from the cavity (C) is caused to flow.

2. The mold (100) according to claim 1, wherein the upper mold (110) is a punch (110a) on which the recess (113a) is formed.

3. The mold according to claim 1, wherein
the upper mold (110) includes:
a holder (110b) on which the recess (113a) is formed and which presses the metal member (10); and
a punch (110a) for molding.

4. The mold (100) according to any one of claims 1 to 3, wherein the recess (113a) has a shape longer in a vertical direction than in a horizontal direction.

5. The mold (100) according to any one of claims 1 to 4, wherein the recess (113a) has a seat portion (113b) capable of supporting the resin material from below.

6. The mold (100) according any one of claims 1 to 5, wherein
the metal-resin composite (1) has, in a cross section perpendicular to a longitudinal direction, a bottom wall portion (2) extending in the horizontal direction, a side wall portion (3) rising from both ends of the bottom wall portion (2), and a flange portion (4) extending outward in the horizontal direction from the side wall portion (3),
the upper mold (110) has, in the cross section, a first molding upper surface (111) for molding the bottom wall portion (2), a second molding upper surface (112) for molding the side wall portion (3), and a third molding upper surface (113) for molding the flange portion (4),
the lower mold (120) has, in the cross section, a first molding lower surface (121) for molding the bottom wall portion (2), a second molding lower surface (122) for molding the side wall portion (3), and a third molding lower surface (123) for molding the flange portion (4), and
a step (112a) is provided on the second molding upper surface (112).

7. The mold (100) according to claim 6, wherein a length of the second molding upper surface (112) above the step (112a) is 5 mm or more.

8. The mold (100) according to claim 6 or 7, wherein in a state where the upper mold (110) and the lower mold (120) are closed, a distance between the second molding upper surface (112) and the second molding lower surface (122) is set to be at least partially equal to a thickness of the metal member (10).

9. An apparatus (50) for producing a metal-resin composite by press molding a metal member (10) and a resin material (20), the apparatus (50) comprising:
an upper mold (110) and a lower mold (120) that sandwich the metal member (10) and the resin material (20); and
a drive unit (130) that moves at least one of the upper mold (110) and the lower mold (120) in a vertical direction,
wherein a cavity (C) for arranging the resin material (20) is provided by the upper mold (110) and the lower mold (120), and
the upper mold (110) has a recess (113a) into which the resin material (20) leaking from the cavity (C) is caused to flow.

10. A method for producing a metal-resin composite (1) by press molding a metal member (10) and a resin material (20), the method comprising:
sandwiching the metal member (10) and the resin material (20) between an upper mold (110) and a lower mold (120) on which a cavity (C) for arranging the resin material (20) is provided,
**characterized in that**
the method further comprises causing the resin material (20) leaking from the cavity (C) to flow toward a recess (113a) provided on the upper mold (110) in order to collect the resin material (20) in the recess (113a).
